# EUROPEAN PATENT SPECIFICATION

(11) **EP 1 064 847 B1**
(45) Date of publication and mention of the grant of the patent: **04.08.2004**
(21) Application number: 00202149.1
(22) Date of filing: 20.06.2000
(51) Int. Cl.: A21C 9/08

(54) **Gripper for gripping at least one dough ball**
Greifer zum Greifen von mindestens einer Teigkugel
Pince de préhension pour saisir au moins une boule de pâte

(30) Priority: 01.07.1999 BE 9900455
(43) Date of publication of application: 03.01.2001
(73) Proprietor: de Longree, Pierre Adelin Jean René, 1470 Bousval (BE)
(72) Inventor: de Longree, Pierre Adelin Jean René, 1470 Bousval (BE)
(74) Representative: Donné, Eddy

(56) References cited:
- DE-A- 1 901 090
- DE-A- 3 210 557
- DE-A- 3 911 845
- DE-A- 19 507 722
- FR-A- 1 208 012
- US-A- 3 501 024
- US-A- 3 652 117
- US-A- 3 831 778

## Description

The present invention concerns a gripper for gripping at least one dough ball, which device contains at least two jaws which can be moved in relation to one another, as well as means for moving the jaws in relation to one another.

In particular, the invention concerns a gripper for gripping at least one dough ball in order to move this dough ball from a plate to a baking tin.

For the baking of particular products, for example sugar waffles, instead of a liquid dough, use is made of a rather solid dough which is shaped into balls.

When they have just been shaped, such dough balls are quite firm. After these dough balls have risen in an oven, they are somewhat less firm, without having become liquid, however.

A first manner for transposing said dough balls from the plate upon which they have risen to the baking tins in which the dough balls will be baked, consists in turning the above-mentioned plate upside down above the baking tins.

In many cases, the dough balls are very sticky, for example in the case of dough balls for making sugar waffles, as a result of which they stick onto the plate upon which they lie, even if the plate is coated with an anti-tack layer.

That is why, in order to move such dough balls, use is made of moveable grippers for gripping dough balls.

Known grippers for example as disclosed in DE-A-3 911 845 comprise tongs whose jaws consist of two bent grates or plates in between which the dough ball is clasped.

These known grippers are disadvantageous, however, in that the dough ball is somewhat flattened due to the clasping, and consequently loses its round shape. When the dough ball is then baked in a baking tin, the obtained waffle will not have the desired, round shape.

As a result of the clasping, the dough ball can even be squashed to pieces.

The invention aims a gripper for gripping at least one dough ball which remedies the above-mentioned and other disadvantages and which makes it possible to grasp a dough ball without flattening it and without making it fall into pieces.

This aim is reached according to the invention in that the jaws of the device for gripping the dough ball are provided with at least one pen on the sides which are turned towards one another.

When a dough ball is being gripped, the pens of the jaws penetrate into the dough ball, so that it can be picked up without being seriously deformed.

Preferably, each jaw will be provided with more than pen for a dough ball, and according to the most preferred embodiment with three pens per dough ball, whereby the pens of the one jaw are tilted in relation to the pens of the other jaw.

In order to better explain the characteristics of the invention, the following preferred embodiment of a gripper for gripping at least one dough ball according to the invention is described as an example only without being limitative in any way, with reference to the accompanying drawings, in which:
figure 1 schematically represents a side view of a device for transposing dough balls which is equipped with a gripper for gripping a dough ball according to the invention;
figure 2 represents a section according to line II-II in figure 1 to a larger scale;
figure 3 represents a section analogous to that of figure 2, but to a smaller scale and with reference to another embodiment of the gripper.

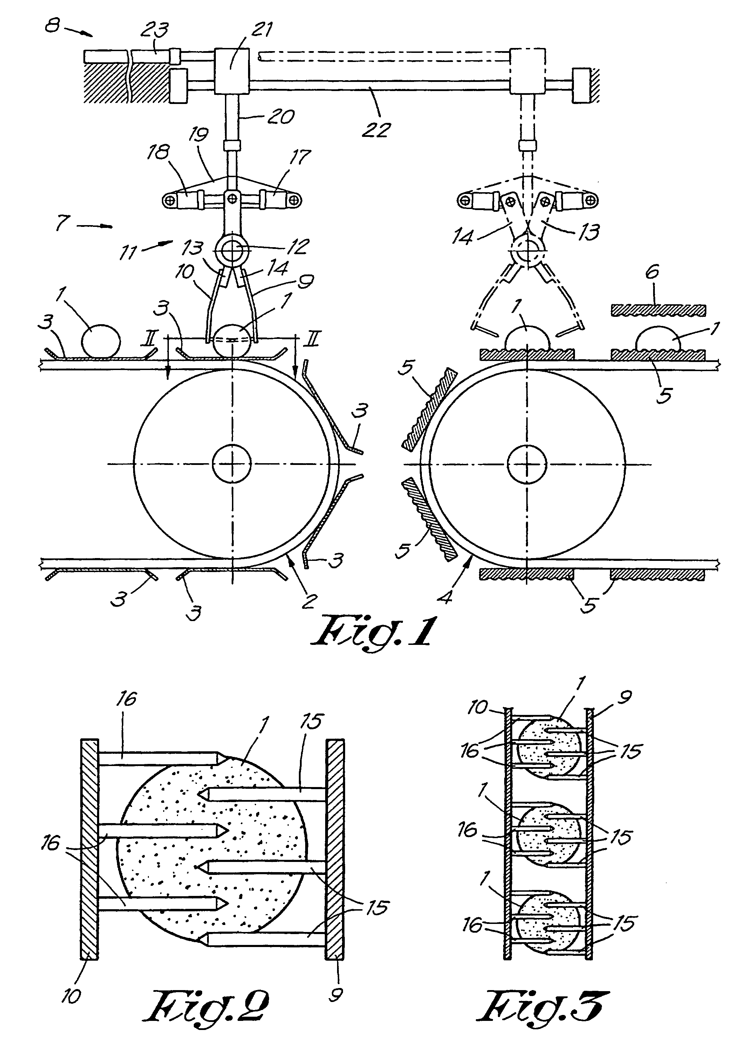

Figure 1 represents a device for transposing at least one dough ball 1 from an oven in which they rise and of which only the transport device 2 with the trays 3 for the dough balls 1 is represented, to a baking oven of which only the transport device 4 for the lower parts 5 of the baking tins and one top part 6 is represented.

This device mainly consists of a gripper 7 for gripping a dough ball 1 and a transport device 8 for moving this gripper 7.

The gripper 7 mainly consists of two jaws 9 and 10 which are hinge-mounted in relation to one another, and of means 11 for hinging these jaws 9 and 10 in relation to one another.

The jaws 9 and 10 are hinge-mounted in relation to one another by means of a shear mechanism having a horizontal shaft 12 and legs 13 and 14 which can revolve around the latter. The jaws 9 and 10 are fixed to the lower ends of the legs 13 and 14.

The legs 13 and 14 are shaped such that the legs 13 and 14 can overlap with their parts situated above the shaft 12, as is represented by means of a full line in figure 1. In this position, the parts of the legs 13 and 14 situated under the shaft 12 still lie far enough from one another in order to prevent the jaws 9 and 10 from flattening the dough ball 1.

The above-mentioned jaws 9 and 10 are equipped with a group of three pens 15, 16 respectively, near their lower ends and on their sides turned towards one another, which are situated on an almost horizontal line and at a regular distance from one another.

The pens 15 of the one jaw 9 are hereby tilted in relation to the pens 16 of the other jaw 10.

The pens 15 and 16 may have any section whatsoever, but in the given example they are round.

Depending on the firmness of the dough being used, the diameter of the pens 15 and 16 varies from one to five millimetre. For example for gripping a dough ball 1 for making sugar waffles, the diameter will be about two millimetre.

If the diameter of the pens 15 and 16 is too small, they can be deformed while a dough ball 1 is being gripped, or they can cut through the dough ball 1, whereas, if their diameter is too large, they can squash the dough ball 1 into pieces.

The lower end of the jaws 9 and 10 can be bent or flat, as is represented in detail in figure 2, whereby all the pens 15 and 16 have the same length then.

The means 11 for hinging the jaws 9 and 10 in relation to one another consist of two pressure cylinders 17 and 18 which are hinge-mounted to the legs 13 and 14 respectively on the one hand, and which are hinge-mounted to a yoke 19 on the other hand.

This yoke 19 is fixed to the above-mentioned transport device 8, together with the shaft 12, which can move the gripper 7 up and down as well as horizontally.

These movements can be carried out in various manners, for example in a pneumatic manner, whereby the transport device 8, as is represented in figure 1, contains a vertical cylinder mechanism 20 which is fixed on a carriage 21 which can be shifted over a fixed horizontal guide 22 by means of a second cylinder mechanism 23.

The pressure cylinders 17 and 18 and the cylinder mechanisms 20 and 23 can be operated in a known manner which is not described into detail here, for example by means of controlled pneumatic valves.

The working of the above-described gripper 7 is as follows:

The gripper 7 is placed over a dough ball 1 by the transport mechanism 8, which dough ball 1 is lying on a tray 3 of the transport device 2.

By means of the pressure cylinders 17 and 18, the jaws are or have been revolved maximally away from one another. The distance between the pens 15 and 16 is hereby larger than the diameter of the dough ball 1.

In this position, the gripper 7 is moved down as the cylinder mechanism 20 is extended, until the pens 15 and 16 are situated near the centre of the dough ball, on either side thereof.

By pulling out the pressure cylinders 17 and 18, the jaws 9 and 10 are brought towards one another, as a result of which the pens 15 and 16 penetrate in the dough ball 1, without the rest of the jaws 9-10 touching said dough ball 1.

In figure 1, the gripper 7 is represented in this position as a full line.

Next, the dough ball 1 is picked up as a whole by the gripper 7, without being flattened or without falling apart, by pushing the cylinder mechanism 20 in again.

The cylinder mechanism 20 and the gripper 7 are now moved as a whole by the cylinder mechanism 23 above a lower part 5 of the baking tin which has been supplied in the meantime.

The cylinder mechanism 20 is pulled out again until the dough ball 1 lies on the lower part 5 of the baking tin and is even pressed somewhat in this part 5, after which the pressure cylinders 17 and 18 move the jaws 9 and 10 away from one another again.

The gripper 7 is represented in this position by a chain line in figure 1.

By means of the cylinder mechanisms 20 and 23, the gripper 7 can again be placed above a new dough ball 1 which has been supplied on a following tray 3 by the transport device 2, after which the above-described cycle is repeated.

In the meantime, the lower part 5 of the baking tin is moved by the transport device 4, and the top part 6 is placed upon it, so that the flattened dough ball 1 can be baked.

As the dough ball 1 remains round until it is pressed between the parts 5-6 of the baking tin, a round waffle will be obtained.

The number of pens 15 and 16 on each jaw 9 or 10 for gripping a dough ball 1 does not necessarily need to be three.

Nor must the jaws 9 and 10 necessarily be hinge-mounted in relation to one another; they can be moved in relation to one another in other ways, for example as they are provided on slidable carriages.

Nor must the movement of the jaws 9 and 10 be necessarily carried out in a pneumatic manner; it can also be carried out mechanically. Thus, the two jaws 9 and 10 can be fixed to concentric shafts which can be separately driven by motors.

In large baking devices, several waffles are baked at a time, and thus several dough balls 1 are simultaneously transported from a tray 3 upon which they are lying in rows to a row of lower parts 5 of a baking tin.

To this end, it is possible to erect several grippers 7 in a row, whereby either the means for moving them in relation to one another operate synchronously, or whereby the legs 13, 14 respectively are connected to one another.

The jaws 9 and 10 respectively can also be provided on a common support, whereby the means 11 for moving the jaws 9 and 10 in relation to one another then consist of means for moving the supports in relation to one another.

It is even possible to provide for common jaws 9 and 10 for all the dough balls 1 to be grasped simultaneously, which are then suspended for example only at the far ends to the transport device 8 by means of a shear mechanism.

Figure 3 schematically represents a section of a part of such a gripper 7.

The jaws 9 and 10 are provided with groups of three pens 15, 16 respectively per dough ball 1 on the sides which are turned towards one another. As represented in the embodiment according to figures 1 and 2, the number of pens 15 or 16 per group does not necessarily need to be three.

## Claims

1. Gripper for gripping at least one dough ball (1), which contains at least two jaws (9 and 10) which can be moved in relation to one another, as well as means (11) for moving the jaws (9 and 10) in relation to one another, **characterised in that** the jaws (9 and 10) for gripping the dough ball (1) are provided with at least one pen (15,16) on the sides which are turned towards one another.

2. Gripper according to claim 1, **characterised in that** the jaws (9 and 10) are provided with more than one pen (15,16) per dough ball (1) on the sides which are turned towards one another.

3. Gripper according to claim 2, **characterised in that** the jaws (9 and 10) are provided with three pens (15,16) on the sides which are turned towards one another.

4. Gripper according to any of the claims, **characterised in that** the at least one pen of the one jaw (9) are tilted in relation to the at least one pen (16) of the other jaw (10).

5. Gripper according to any of the preceding claims, **characterised in that** the pens (15 and 16) are round and have a diameter which is between one and five millimetre.

6. Gripper according to claim 5, **characterised in that** the pens (15 and 16) have a diameter of two millimetre.

7. Gripper according to any of the preceding claims, **characterised in that** the gripper (7) contains exactly two jaws (9 and 10).

8. Gripper according to any of the preceding claims, **characterised in that** the jaws (9 and 10) are hinge-mounted in relation to one another and **in that** the means (11) for moving them in relation to one another are means for hinging them in relation to one another.

9. Gripper according to claim 8, **characterised in that** the jaws (9 and 10) are fixed to the legs (13 and 14) of at least one shear mechanism, and **in that** the means for hinging the jaws (9 and 10) in relation to one another contain at least one pressure cylinder (17,18) for moving the legs (13 and 14) in relation to one another.

10. Gripper according to any of the preceding claims, **characterised in that** the jaws (9 and 10) are provided with several groups of at least one pen on the sides turned towards one another for grasping several dough balls (1) simultaneously.

11. Gripper according to any of the preceding claims, **characterised in that** it is part of a device for transposing dough balls (1) to lower parts (5) of baking tins.

## Patentansprüche

1. Greifer zum Greifen von mindestens einer Teigkugel (1), der mindestens zwei Backen (9 und 10), die in Bezug zueinander bewegt werden können, sowie Mittel (11) zum Bewegen der Backen (9 und 10) in Bezug zueinander umfasst, **dadurch gekennzeichnet, dass** die Backen (9 und 10) zum Greifen der Teigkugel (1) an den Seiten, mit denen sie zueinander gerichtet sind, mit mindestens einem Stift (15,16) versehen sind.

2. Greifer nach Anspruch 1, **dadurch gekennzeichnet, dass** die Backen (9 und 10) an den Seiten, die zueinander gerichtet sind, mit mehr als einem Stift (15,16)versehen sind.

3. Greifer nach Anspruch 2, **dadurch gekennzeichnet, dass** die Backen (9 und 10) an den Seiten, die zueinander gerichtet sind, mit drei Stiften (15,16)versehen sind.

4. Greifer nach einem der vorhergehenden Ansprüche, **dadurch gekennzeichnet, dass** mindestens ein Stift der Backe (9) in Bezug auf mindestens einen Stift (16) der anderen Backe (10) geneigt ist.

5. Greifer nach einem der vorhergehenden Ansprüche, **dadurch gekennzeichnet, dass** die Stifte (15 und 16) rund sind und einen Durchmesser zwischen einem und fünf Millimeter haben.

6. Greifer nach Anspruch 5, **dadurch gekennzeichnet, dass** die Stifte (15 und 16) einen Durchmesser von zwei Millimeter haben.

7. Greifer nach einem der vorhergehenden Ansprüche, **dadurch gekennzeichnet, dass** der Greifer (7) genau zwei Backen (9 und 10) umfasst.

8. Greifer nach einem der vorhergehenden Ansprüche, **dadurch gekennzeichnet, dass** die Backen (9 und 10) mit Scharnieren aneinander befestigt sind und dass die Mittel (11), um sie in Bezug zueinander zu bewegen, Mittel sind, um sie um ein Scharnier drehend in Bezug zueinander zu bewegen.

9. Greifer nach Anspruch 8, **dadurch gekennzeichnet, dass** die zwei Backen (9 und 10) an den Beinen (13 und 14) von mindestens einem Scherenmechanismus befestigt sind und dass die Mittel, um die Backen (9 und 10) um ein Scharnier drehend in Bezug zueinander zu befestigen, mindestens einen Druckzylinder (17,18) aufweisen, um die Beine (13 und 14) in Bezug zueinander zu bewegen.

10. Greifer nach einem der vorhergehenden Ansprüche, **dadurch gekennzeichnet, dass** die Backen (9 und 10) mit mehreren Gruppen von mindestens einem Stift an den zueinander gerichteten Seiten versehen sind, um mehrere Teigkugeln ( 1 ) gleichzeitig zu greifen.

11. Greifer nach einem der vorhergehenden Ansprüche, **dadurch gekennzeichnet, dass** er Teil einer Vorrichtung zum Befördern von Teigkugeln (1) zu den unteren Teilen (5) von Backblechen zu befördern.

## Revendications

1. Pince de préhension pour saisir au moins une boule de pâte (1), qui contient au moins deux mâchoires (9 et 10) qui peuvent être déplacées l'une par rapport à l'autre, ainsi que des moyens (11) pour déplacer des mâchoires (9 et 10) l'une par rapport à l'autre, **caractérisée en ce que** les mâchoires (9 et 10) pour saisir la boule de pâte (1) sont munies d'au moins une pointe (15, 16) sur les côtés qui sont orientés l'un vers l'autre.

2. Pince de préhension selon la revendication 1, **caractérisée en ce que** les mâchoires (9 et 10) sont munies de plus d'une pointe (15, 16) par boule de pâte (1) sur les côtés qui sont orientés l'un vers l'autre.

3. Pince de préhension selon la revendication 2, **caractérisée en ce que** les mâchoires (9 et 10) sont munies de trois pointes (15, 16) sur les côtés qui sont orientés l'un vers l'autre.

4. Pince de préhension selon l'une quelconque des revendications précédentes, **caractérisée en ce qu'**au moins une pointe d'une mâchoire (9) est inclinée par rapport à au moins une pointe (16) de l'autre mâchoire (10).

5. Pince de préhension selon l'une quelconque des revendications précédentes, **caractérisée en ce que** les pointes (15 et 16) sont rondes et possèdent un diamètre qui se situe entre 1 et 5 mm.

6. Pince de préhension selon la revendication 5, **caractérisée en ce que** les pointes (15 et 16) possèdent un diamètre de 2 mm.

7. Pince de préhension selon l'une quelconque des revendications précédentes, **caractérisée en ce que** la pince de préhension (7) contient exactement deux mâchoires (9 et 10).

8. Pince de préhension selon l'une quelconque des revendications précédentes, **caractérisée en ce que** les mâchoires (9 et 10) sont montées en articulation l'une par rapport à l'autre et **en ce que** les moyens (11) pour les déplacer l'une par rapport à l'autre sont des moyens pour les articuler l'une par rapport à l'autre.

9. Pince de préhension selon la revendication 8, **caractérisée en ce que** les mâchoires (9 et 10) sont fixées aux branches (13 et 14) d'au moins un mécanisme de cisaillement, et **en ce que** les moyens pour articuler les mâchoires (9 et 10) l'une par rapport à l'autre contiennent au moins un cylindre de pression (17, 18) pour déplacer les branches (13 et 14) l'une par rapport à l'autre.

10. Pince de préhension selon l'une quelconque des revendications précédentes, **caractérisée en ce que** les mâchoires (9 et 10) sont munies de plusieurs groupes d'au moins une pointe sur les côtés orientés l'un vers l'autre pour saisir plusieurs boules de pâte (1) de manière simultanée.

11. Pince de préhension selon l'une quelconque des revendications précédentes, **caractérisée en ce qu'**elle fait la partie d'un dispositif pour transposer des boules de pâte (1) à des parties inférieures (5) de moules de cuisson.
